Europäisches Patentamt

European Patent Office

Office européen des brevets

(11) Veröffentlichungsnummer: **0 056 033**
**B1**

(12) **EUROPÄISCHE PATENTSCHRIFT**

(45) Veröffentlichungstag der Patentschrift:
05.12.84

(21) Anmeldenummer: 81901814.4

(22) Anmeldetag: 25.06.81

(86) Internationale Anmeldenummer:
**PCT/EP 81/00084**

(87) Internationale Veröffentlichungsnummer:
**WO 82/00011 (07.01.82 Gazette 82/1)**

(51) Int. Cl.³: **B 01 F 15/04,** A 21 C 1/14

(54) **VERFAHREN UND ANLAGE ZUM ZUDOSIEREN VON MEHL UND/ODER FLÜSSIGKEIT(EN) IN CHARGENKNETER ZUR TEIGHERSTELLUNG.**

(30) Priorität: 25.06.80 DE 3023823

(43) Veröffentlichungstag der Anmeldung:
21.07.82 Patentblatt 82/29

(45) Bekanntmachung des Hinweises auf die Patenterteilung:
05.12.84 Patentblatt 84/49

(84) Benannte Vertragsstaaten:
CH FR GB LI

(56) Entgegenhaltungen:
DE - A - 2 323 245
DE - A - 2 705 223
US - A - 4 061 314

(73) Patentinhaber: Gebrüder Bühler AG, CH-9240 Uzwil (CH)

(72) Erfinder: SCHNEEBERGER, Werner, Wilerstrasse 214,
CH-9230 Flawil (CH)

(74) Vertreter: Geyer, Werner, Dr.-Ing. et al, Patentanwälte
GEYER, HAGEMANN & PARTNER
Postfach 860329 Ismaninger Strasse 108,
D-8000 München 86 (DE)

**Beschreibung**

Die Erfindung bezieht sich auf ein Verfahren zum Zudosieren von Mehl und/oder Flüssigkeit(en) in Chargenkneter einer Anlage zur Teigherstellung, bei dem unter Einsatz eines Steuergerätes die einem Chargenkneter im Rezeptablauf jeweils zuzuführende Komponente bestimmt, von einem zugeordneten Aufnahmebehälter aus längs einer von diesem ausgehenden Transportleitung gefördert und dem betreffenden Chargenkneter zudosiert wird, sowie auf eine Anlage zur Durchführung eines solchen Verfahrens, mit Chargenknetern zur Teigherstellung, mit Transportleitungen, über die jeder Chargenkneter mit einem Aufnahmebehälter für die jeweils zu dosierende Komponente verbunden ist, und mit einem Steuergerät, mittels dessen die Ausdosierung der Komponenten aus den jeweiligen Transportleitungen steuerbar ist.

Bei der industriellen Brotherstellung ist neben dem Backprozess die eigentliche Teigvorbereitung, insbesondere die Knetung des Teiges, ein ganz wichtiger Schritt in der Gesamtherstellung. Über die richtige Knetung kann wesentlich der gute Geschmack des Brotes wie auch dessen «Mundgefühl» in starkem Masse beeinflusst werden. Alle Versuche, den Knetvorgang vollautomatisch, das heisst, ohne gleichzeitigen menschlichen Eingriff zu steuern, haben allerdings bis heute nicht zu dem gewünschten Erfolg geführt.

Im wesentlichen gliedert sich die Teigvorbereitung in drei Einzelschritte auf, nämlich die Zusammenstellung der Teigmassen in einem Chargenkneter, den Knetprozess als solchen und die Gärung. In mittleren und grösseren industriellen Bäckereien sind in der Regel gleichzeitig mehrere Chargenkneter im Einsatz, wobei herkömmlicherweise jeder einzelne Kneter durch eine Bedienungsperson betreut wird. Hierdurch ist es möglich, die ganze Teigvorbereitung im wesentlichen gleich durchzuführen, wie dies die Bäcker von alters her gewohnt sind. In der gewerblichen wie industriellen Brotherstellung ist die sehr anstrengende Handknetung bereits durch maschinelle Kneter ersetzt worden, wobei in jüngerer Zeit vermehrt Kneter von grösserem Fassungsvermögen eingesetzt werden. Die einzelnen Komponenten, wie Mehl (gegebenenfalls verschiedene Mehlsorten), Hefe, Zucker, Salz und Wasser und so weiter, werden genau nach dem vorgegebenen Rezept in einen Chargenkneter eingeschüttet, worauf die Bedienungsperson den Kneter startet, von Zeit zu Zeit den Teig beziehungsweise den Knetprozess überprüft und aufgrund ihrer persönlichen Erfahrung zusätzlich Mehl, Wasser oder ähnliches zudosiert. Zumindest bei schwierigen Produkten steuert die Bedienungsperson die Dauer und Intensität des Knetvorganges so, dass dieser am Ende zu einer möglichst optimalen Teigqualität führt. Dabei ist allerdings vorausgesetzt, dass zum Beispiel während eines ganzen Tages stets die gleiche Brotsorte und -grösse fabriziert wird, wodurch es möglich ist, die gewählten Einstellungen oder ähnliche über den ganzen Tag hinweg unverändert bestehen zu lassen. Üblicherweise wird bei solchen Anlagen aber auch ein ganzes Brot- und Feingebäcksortiment hergestellt, wobei stets der eigentliche kunsthandwerkliche Beitrag des Bäkkers erforderlich ist. Es hat sich dabei bisher als zweckmässig erwiesen, jedem Chargenkneter, der beachtliche räumliche Abmessungen aufweisen kann, zumindest eine oder mehrere Einzelwaagen für die Zudosierung zum Beispiel des Wassers zuzuordnen. Versuche, die relativ teuren Waagen zumindest für das Wasser durch Wasseruhren zu ersetzen, führten wegen der mangelnden Genauigkeit durchaus nicht zu einem restlos befriedigenden Ergebnis. Deshalb werden vermehrt wieder Einzelwaagen eingesetzt, mit denen eine Genauigkeit unter $\pm$ 0,2 bis 0,3 % garantiert werden kann.

Eine weitere Besonderheit bei der industriellen Brotherstellung liegt auch darin, dass nicht nur die Menge des Wassers, sondern auch dessen Temperatur genau nach Rezept eingehalten beziehungsweise gesteuert werden muss. In grösseren Anlagen wird hierfür Wasser verschiedener Temperaturen eingesetzt, wobei das Leitungswasser mit Warmwasser und Kaltwasser in entsprechenden Anteilen gemischt wird, um aus der Summe der Komponenten die gewünschte Menge mit der gewünschten Temperatur zu erhalten. Teilweise wird auch die Hefe zusammen mit einer der Wasserkomponenten dem Chargenmischer zugegeben. Allerdings ergeben sich auch gewisse Vorteile, wenn die Hefe und das Salz in flüssiger Form als weitere, eigene Flüssigkomponenten zudosiert werden. Für die Mischberechnung der Flüssigkeitskomponenten müssen alle Anteile berücksichtigt werden.

Aus der US-A-4 061 314 ist es bekannt, eine Ringleitung, in der die flüssigen Komponenten zirkulieren, zum Temperaturausgleich einzusetzen.

Ein Verfahren und eine Vorrichtung der eingangs genannten Art ist in der DE-A-23 23 245 beschrieben. In dieser Druckschrift wird von einer Dosierung und einer Mischung (Knetung) an unterschiedlicher Stelle ausgegangen und ausdrücklich eine volumetrische Messung bzw. Dosierung am Kneter vorgeschlagen. In der DE-A-23 23 245 wird zwar ebenfalls ein Steuergerät gezeigt, das jedoch jeweils nur für einen einzelnen Chargenkneter vorgesehen ist.

Ausgehend hiervon liegt der Erfindung die Aufgabe zugrunde, ein Verfahren und eine Anlage zu finden, die eine automatische, zentrale Steuerung zulässt, zu einem Teig sehr guter Qualität führt und gleichzeitig der einzusetzende Aufwand insgesamt gegenüber den bekannten Verfahren beziehungsweise Anlagen besonders gering sein soll; überdies soll auch eine Eingriffsmöglichkeit von Hand unbeschränkt erhalten bleiben.

Diese Aufgabe wird bei einem Verfahren der eingangs genannten Art dadurch gelöst, dass mittels des Steuergerätes für alle Chargenkneter die jeweils zu dosierende Komponente zentral bestimmt und deren der gewünschten Dosiermenge entsprechendes Gewicht berechnet wird, die betreffende Komponente für alle Chargenkneter von einem für sie vorgesehenen zentralen Verwägebehälter aus der entsprechenden Transportleitung zugeführt und von dieser aus dem jeweils zu bedienenden Chargenkneter über eine Steuerung der Öffnungsdauer der ihm jeweils zugeordneten Auslassventile durch das zentrale Steuergerät in Abhängigkeit von der während der Ventilöffnung im zugeordneten zentralen Verwägebehälter auftretenden Gewichtsabnahme der dort aufgenommenen Komponentenmenge zudosiert wird. Beim erfindungsgemässen Verfahren ist in überraschender Weise sowohl eine besonders genaue und präzise Dosierung wie gleichzeitig die Möglichkeit einer zentralen Steuerung auf einfache Art und Weise gegeben. Während bei dem bisher in dieser Technik beschrittenen Wege jede weitere Automatisierung der Teigvorbereitung zu einer nicht mehr tragbaren Massierung von Waagen, Kontroll- und Steuermitteln führte, wird demgegenüber beim erfindungsgemässen Verfahren die Dosierung jeder Einzelkomponente mittels einer für diese Komponente einzigen Waage, die mittels eines zentralen Steuergerätes alle gewünschten Anzapfstellen bedient, überraschend einfach gelöst und überdies ein neuer Weg für eine sinnvolle Automatisierung gefunden. Das erfindungsgemässe Verfahren lässt sich auch durch handelsübliche Computer leicht steuern. Die Steuerung über das zentrale Steuergerät kann dabei zum Beispiel als ein Leitcomputer angesehen werden, der als Rezeptverwalter auch im wesentlichen alle Misch- und Dosieraufgaben rechnet und steuert, gleichzeitig aber auch für die zentralen beziehungsweise gesonderten Steuergeräte für die Chargenkneter zuschaltbar ist. Gewünschte Rezeptkorrekturen können auf einfachem Wege dem erfindungsgemässen Verfahren über die zentrale Steuerung mitgeteilt werden, so dass zum Beispiel eine Änderung der Einzelkomponenten in einem entsprechenden Programm ergänzt und, falls das gleiche Produkt erneut hergestellt werden soll, von vornherein berücksichtigt werden kann.

Vorteilhafterweise wird bei dem erfindungsgemässen Verfahren die flüssige Komponente (beziehungsweise die eingesetzten flüssigen Komponenten) von ihrem zentralen Verwägebehälter aus längs einer als Ringleitung ausgebildeten Transportleitung kontinuierlich gefördert, wodurch die Flüssigkeit(en) vor und/oder während der Dosierung laufend in einem Kreislauf an die verschiedenen Anzapfstellen und zurück in den Verwägebehälter geführt und dadurch in laufender Zirkulation gehalten wird (werden). Hierdurch ist es möglich, durch nur geringfügigen Mehraufwand an der Rohrleitung eine Mehrzahl von Einzelwaagen einzusparen und dabei dennoch mindestens gleich gute Genauigkeiten wie bei vorbekannten anderen Lösungen zu erreichen.

Wird die flüssige Komponente in verschiedenen Temperaturen für die Dosierung benötigt, so besteht neben der Möglichkeit eines Zusammenmischens der gewünschten Dosiertemperatur der flüssigen Komponente aus Einzelkreisläufen bestimmter Ausgangstemperaturen (Eiswasser, Leitungswasser, Heisswasser) jedoch noch eine weitere, vorteilhafte Ausgestaltung des erfindungsgemässen Verfahrens darin, dass für jede Dosiertemperatur ein eigener Einzelkreislauf mit Verwägebehälter und Transportleitung eingesetzt wird. Dabei wird vorzugsweise die Temperatur der jeweiligen flüssigen Komponente im Verwägebehälter oder in der Transportleitung laufend gemessen und mittels des zentralen Steuergerätes auf einen vorgegebenen Wert (der einstellbar sein kann) eingeregelt. Hierdurch lässt sich der Vorteil erreichen, dass die Temperaturmessung während des ganzen Arbeitsvorganges den wahren Ist-Zustand darstellt, da der Kreislauf für die betreffende Komponente sich wärmemässig im Gleichgewicht befindet. Die Temperaturmessung lässt sich dabei so ausführen, dass sie nicht nur ständig überwacht wird, sondern bei Bedarf auch registrierbar ist.

Um in möglichst kurzer Zeit eine möglichst genaue Dosierung erhalten zu können, ist es weiterhin bei dem erfindungsgemässen Verfahren von Vorteil, wenn das Ausdosieren der Komponenten aus dem jeweiligen Auslassventil zweiphasig durchgeführt wird, wobei die erste Auslassphase als Grobstromdosierung und die sich unmittelbar anschliessende zweite Phase als Feinstromdosierung ausgelegt ist.

Die erfindungsgemässe Anlage zur Ausführung eines erfindungsgemässen Verfahrens weist mehrere Chargenkneter zur Teigherstellung auf sowie Transportleitungen, über die jeder Chargenkneter mit einem Aufnahmebehälter für die jeweils zu dosierende Komponente verbunden ist. Weiterhin weist diese Anlage ein Steuergerät auf, mittels dessen die Ausdosierung der Komponenten aus den jeweiligen Transportleitungen steuerbar ist, und ist dadurch gekennzeichnet, dass für jede der zu dosierenden Komponenten ein für alle Chargenkneter zentraler Verwägebehälter als Aufnahmebehälter vorgesehen ist, von dem aus mittels einer Transportleitung die betreffende Komponente an jede zu bedienende Dosierstelle transportierbar ist, wobei längs jeder solchen Transportleitung den einzelnen zu bedienenden Chargenknetern zugeordnete Anzapfstellen mit Auslassventilen angeordnet sind, und dass das Steuergerät als alle Chargenkneter zentral steuernd ausgebildet ist und durch das zentrale Steuergerät die den gewünschten Dosiermengen aller zu dosierenden Komponenten entsprechenden Gewichte berechenbar sowie die Dosierfolge der Einzelkomponenten im Rezeptablauf auslösbar sind, und dass ferner Zeitpunkt und Dauer der Öffnung der Auslassventile von dem zentralen Steuergerät steuerbar sind. Die gewünschte gewichtsmässige Dosierung der Einzelkomponenten kann dabei dadurch erfolgen, dass die Öffnungsdauer der Auslassventile über das zentrale Steuergerät in Abhängigkeit von der während der Öffnung des betreffenden Auslassventiles im zugeordneten zentralen Verwägebehälter auftretenden Gewichtsänderung der betreffenden Dosierkomponente gesteuert wird. Vorteilhafterweise kann dabei das zentrale Steuergerät einem Hauptrechner, etwa einem Buchhaltungscomputer, angeschlossen sein, der die laufenden Bedarfsmeldungen beziehungsweise Bestellungen aufnimmt und an das zentrale Steuergerät entsprechende Informationen für ein Tagesprogramm, ein Wochenprogramm oder ähnliches abgibt. Dabei kann das zentrale Steuergerät alle notwendigen Befehle für die Mischungszusammenstellung und auch für den Knetprozess direkt durchgeben und kontrollieren. Die erfindungsgemässe Anlage gibt die Möglichkeit, die gesamte Teigvorbereitung vollautomatisch durchzuführen und mit der Gärung und dem nachgeschalteten Backprozess zu koordinieren. Sollte dennoch infolge einer speziellen Schwierigkeit eines besonderen Produktes einmal ein Handeingriff erforderlich sein, dann wird hierfür vorzugsweise das zentrale Steuergerät auf Handsteuerung umschaltbar ausgeführt, wodurch die Bedienungsperson in diesem Falle die Knetersteuerung jederzeit selbst übernehmen und den Kneterprozess entsprechend einstellen beziehungsweise steuern kann. Hierdurch lässt sich eine optimale Kontinuität in der Teigvorbereitung gewährleisten, wodurch sich eine besonders rationelle Fertigung und eine hohe Qualität des Teiges beziehungsweise des Endproduktes erzielen lässt. Die Aufmerksamkeit des Bedienungspersonals kann sich überdies im wesentlichen nur noch solchen Produkten zuwenden, die als reine Problemprodukte anzusehen sind. Gleichzeitig lässt sich auf diese Weise die ganze Anlage auch in einem komfortablen Handbetrieb zentral steuern und bedienen, wenn zum Beispiel einmal das Steuergerät oder seine Stromversorgung ausfallen sollte.

Bei einer erfindungsgemässen Anlage ist es von Vorteil, wenn für die flüssige(n) Dosierkomponente(n) die jeweilige Transportleitung vom zugehörigen Verwägebehälter aus als in diesen zurücklaufende Ringleitung mit Umwälzpumpe ausgebildet ist, wobei, wiederum vorzugsweise, jede Umwälzpumpe vom zentralen Steuergerät betätigbar ist. Hierdurch lässt sich vor und/oder während der Dosierung die Flüssigkeit in einem Kreislauf an die verschiedenen Anzapfstellen und zurück in den Verwägebehälter laufend in Zirkulation halten, wodurch unter Einsparung einer Vielzahl von Einzelwaagen von einem zentralen Verwägebehälter aus alle Anzapfstellen für die betreffende Komponente bedienbar sind.

Eine weitere vorteilhafte Ausgestaltung der erfindungsgemässen Anlage besteht auch darin, dass jedem Chargenkneter eine Steuereinheit zugeordnet ist, die von dem zentralen Steuergerät angesteuert wird. Vorteilhafterweise sind dabei die Steuereinheiten mehrerer Chargenkneter über ein ihnen gemeinsames Steuergerät an das zentrale Steuergerät angeschlossen, wobei, wiederum vorzugsweise, die Steuereinheiten auf Handsteuerung umschaltbar sind. Der Anschluss einzelner Steuereinheiten an ein übergeordnetes gemeinsames Steuergerät, das seinerseits vom zentralen Steuergerät angesteuert wird, bringt den Vorteil, dass hierdurch ein Informationsaustausch von Einzelinformationen für die verschiedenen angeschlossenen Chargenkneter möglich ist. Die Umsteuerbarkeit der Steuereinheiten auf Handsteuerung bringt in Verbindung mit der Umschaltbarkeit des zentralen Steuergerätes auf Handsteuerung die Möglichkeit, dass gleichermassen die Gesamtanlage von oben wie von unten (soweit sinnvoll) von Hand gesteuert werden kann. Dies gibt die Möglichkeit, dass jederzeit die Bedienungsperson für einen bestimmten Chargenkneter, falls es wünschenswert sein sollte, das diesem Chargenkneter zugeordnete Steuergerät von dem zentralen Steuergerät abschalten kann und in gewohnter herkömmlicher Weise Rezeptkorrekturen oder ähnliches durchführen kann, wodurch der Kneterprozess dem besonderen Bedarfsfalle entsprechend auch mit rein menschlicher Bedienung geführt werden kann. Die Zuschaltbarkeit der Steuergeräte für die einzelnen Chargenkneter (entweder direkt oder über ein gemeinsames Steuergerät) an das zentrale Steuergerät lässt damit auf sehr übersichtliche und einfache Art und Weise die gesammten Vorgänge der Teigherstellung über automatische Mittel steuerbar werden, wodurch die Teigvorbereitung als Teil in die Gesamtsteuerung einer grossen Bäckerei integrierbar ist und wobei gleichzeitig die uneingeschränkte Möglichkeit besteht, das spezielle Erfahrungswissen der einzelnen Bedienungspersonen, das sich unter anderem auch auf deren Sinneswahrnehmungen abstützt, weiterhin zur Erzielung einer guten Gebäckqualität auszunutzen.

Bei der Erfindung kann einerseits der ganze Zyklusablauf in zeitlicher Hinsicht sowohl automatisch wie auch von Hand durch die Bedienungsperson zum Beispiel eines Chargenkneters bestimmt werden. Bei Ausfall der zentralen Steuereinheit kann überdies die Bedienungsperson die gewünschte Mischung im Handbetrieb zusammenstellen und mit der Steuereinheit (oder sogar vollständig ohne Fremdsteuerelemente) durch direkte Handeingabe der Steuerbefehle an den Chargenkneter eine beschränkte Produktion dennoch aufrechterhalten.

Eine weitere vorteilhafte Ausgestaltung der erfindungsgemässen Anlage besteht auch darin, dass die Auslassventile wenigstens der Transportleitungen für flüssige Dosierkomponenten ein Abschlussorgan für Grobdosierung sowie ein Abschlussorgan für Feindosierung aufweisen, wobei die Abschlussorgane von dem zentralen Steuergerät aus ansteuerbar sind.

Es ist weiterhin von Vorteil, wenn bei einer erfindungsgemässen Anlage in Ringleitungen für Flüssigkeiten unterschiedlicher Temperatur Temperaturfühler angebracht sind, die an das zentrale Steuergerät angeschlossen sind, und wenn jedem solchen Kreislauf eine vom zentralen Steuergerät gesteuerte Temperatur-Regeleinrichtung zugeordnet ist.

Die Erfindung ermöglicht somit eine fast universelle Anpassbarkeit der einzelnen Anlagenteile, wobei die Anlage nahezu beliebig verändert (zum Beispiel vergrössert) werden kann, da die Grundfunktionen und die entsprechenden Grund-Anlageelemente beziehungsweise Steuerelemente im wesentlichen unverändert bleiben. Die Erfindung macht eine einfache Lösung all der vielen Koordinationsaufgaben innerhalb ein und derselben Anlage möglich, indem sie, auch für Handbedienung, eine Zentralisierung zum Beispiel für die Inbetriebnahme bei Störung oder bei Ausfall der Elektronik ermöglicht.

Die Erfindung wird nachfolgend anhand der Zeichnung im Prinzip noch näher erläutert. Es zeigen:

Figur 1 eine erfindungsgemässe Anlage zur Teigvorbereitung (diagrammatisch);

Figur 2 ein vereinfachtes Beispiel einer zentralen Flüssig-Dosierung;

Fig. 3 ein Prinzipschema einer erfindungsgemässen Anlagensteuerung.

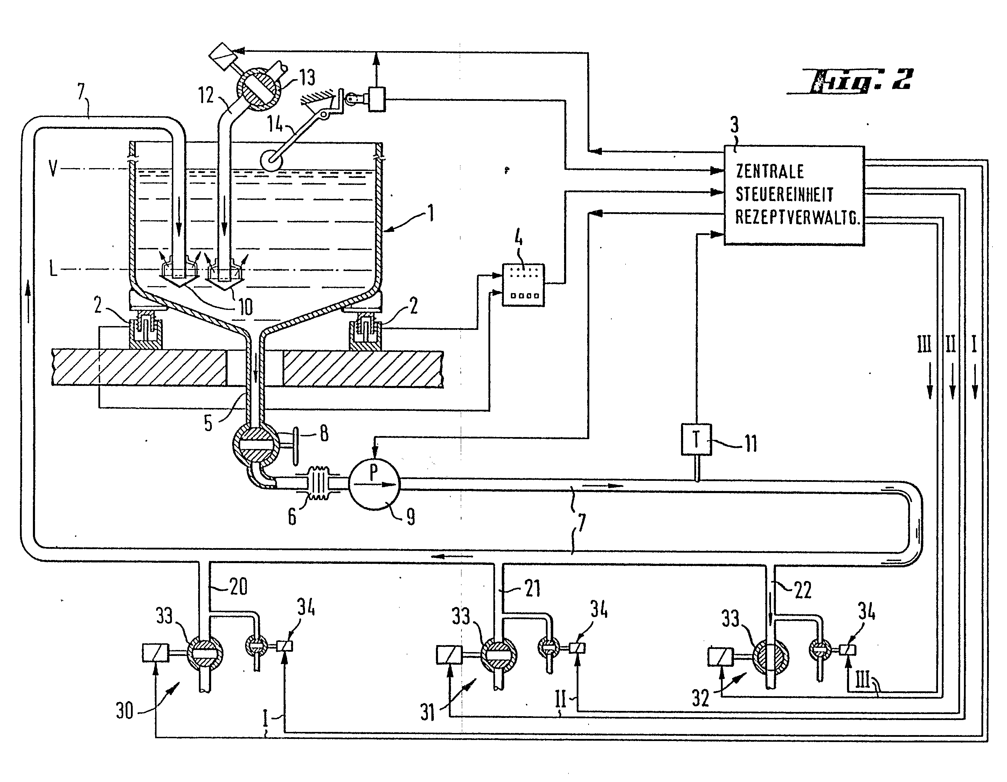

Zunächst sei einleitend die Dosierung einer flüssigen Komponente für die Chargenmischer anhand von Figur 2 erklärt:

Ein zentraler Verwägebehälter 1, der schematisch dargestellt auf Kraftmessdosen 2 abgestützt ist, steht in direkter Steuerverbindung mit einem zentralen Steuergerät 3. Weiterhin ist auch noch ein Waagenanzeigegerät 4 vorgesehen, um Servicearbeiten und so weiter leichter durchführbar zu machen und besonders auch einen reduzierten Handbetrieb leichter steuern zu können. Der Verwägebehälter 1 ist mit einem Auslaufrohr 5 versehen, das über ein elastisches Element 6 direkt an eine Ringleitung 7 angeschlossen ist. Am Auslaufrohr 5 ist ferner ein Abschlussorgan 8 vorgesehen. Die Flüssigkeit (meist Wasser) wird durch eine Umwälzpumpe 9 von dem Verwägebehälter 1 in die Ringleitung 7 und zurück in den Verwägebehälter 1 gefördert. Die Ringleitung 7 mündet mit ihrem freien Ende wieder innerhalb des in dem Verwägebehälter 1 enthaltenen Flüssigkeitsreservoirs, wobei am dortigen Ende der Ringleitung 7 in geeigneter Weise ein Umlenkkörper 10 angebracht ist, um bei der vorzunehmenden Messung des Gewichts des Flüssigkeitsreservoirs innerhalb des Verwägebehälters 1 nicht Verfälschungen infolge Stosseffekten oder ähnlichem auszulösen.

Im mittleren Bereich der Ringleitung 7 ist eine Temperaturmesseinrichtung 11 angeordnet, die mit einer Steuerleitung mit dem zentralen Steuergerät 3 in Verbindung steht. Auch bei dieser Temperaturmesseinrichtung 11 ist eine Direktanzeige der Temperatur vorgesehen.

Frischwasser wird nun über eine Speiseleitung 12, die mit einem vom zentralen Steuergerät 3 aus angesteuerten Ventil 13 versehen ist, dem Verwägebehälter 1 zugeführt. Das Ventil 13 steht ebenfalls auch in Wirkverbindung mit einem Niveaufühler 14, der einerseits als Sicherheitsorgan für Störungen in der Steuerung, andererseits aber auch für den Fall eines Handbetriebes vorgesehen ist.

Die Ringleitung 7 weist drei Anzapfstellen 20, 21 und 22 auf, die zusammen mit dem Verwägebehälter 1 und dem zentralen Steuergerät 3 je eine Dosiervorrichtung 30, 31 und 32 ausbilden. Für einen Handbetrieb tritt hier anstelle des zentralen Steuergerätes 3 die Bedienungsperson mit dem Waageanzeigegerät sowie nicht dargestellte Schaltelemente zur Steuerung der entsprechenden Ventile 33 und 34 an den Anzapfstellen 20, 21 und 22.

In dem zentralen Steuergerät 3 werden alle Funktionen derart gesteuert, dass jeweils nur eine einzige der Dosiervorrichtungen 30, 31 und 32 in Funktion ist (zumindest während der Dosierperioden). Die eingesetzte Steuerung kann aber auch derart ausgelegt sein, dass in Pausen zwischen zwei Dosierperioden an jeder Anzapfstelle unkontrolliert Wasser entnommen werden kann. Solche Perioden können z.B. zusätzlich etwa durch Lichtsignale angezeigt werden.

Ferner ist das zentrale Steuergerät 3 derart programmiert, dass die verschiedenen Anzapfstellen 20, 21 und 22 nach einem bestimmten Rezeptablaufplan (Prioritätenplan) bedient werden, wobei die Stelle mit den häufigsten Wechseln in aller Regel die erste Priorität erhalten wird.

Besonders gute Resultate konnten erreicht werden, wenn an den Anzapfstellen (Auslassventilen) sowohl eine Einrichtung 33 zur Grobstromdosierung wie auch eine Einrichtung 34 zur Feinstromdosierung vorgesehen sind. Über die Grobdosiereinrichtung, die gegebenenfalls im Hinblick auf eine volle Öffnung des Querschnitts der Ringleitung 7, also auf eine maximale Pumpenleistung, ausgelegt sein kann, wird die Menge des Wassers in einer ersten Dosierphase dosiert, auf die unmittelbar anschliessend eine zweite Phase der Dosierung durch die Feindosiereinrichtung 34 folgt, die in der Regel mit kleineren Armaturen ausgeführt ist. Als Arbeitsweise der Anlage ergibt sich folgendes:

Das zentrale Steuergerät 3, in das ein ganzes Tagesprogramm von Hand oder von einem Hauptrechner eingegeben ist, fungiert gleichzeitig auch als Rezeptverwaltungsstelle. Es wählt nach dem vorgegebenen Rezeptablauf beziehungsweise Prioritätenplan zum Beispiel die Anzapfstelle 20, die der Dosierlinie I für den ersten Chargenkneter zugeordnet ist, und rechnet für die in diesem Kneter vorzubereitende Teigqualität nach dem vorgegebenen Rezept die einzudosierende Menge der entsprechenden Dosierkomponente aus. Dabei wird sichergestellt, dass die Ringleitung 7 zum Eindosieren bereit ist, das heisst, dass die in der Ringleitung 7 angeordnete Förderpumpe 9 läuft. Sobald von dem Verwägebehälter 1 die Meldung gegeben ist, dass die erforderliche Menge an Flüssigkeit, zum Beispiel Wasser, vorhanden und dessen Temperatur durch die notwendige Zirkulation ausgeglichen ist, stellt das zentrale Steuergerät 3 das momentane Gewicht des Flüssigkeitsreservoirs in dem Verwägebehälter 1 fest und gibt sodann einen Steuerbefehl zur Öffnung des Ventiles an der Grobdosiervorrichtung 33. Gleichzeitig mit Dosierbeginn wird das Ventil 13 in der Frischwasserzuführung 12 vom zentralen Steuergerät 3 geschlossen. Das zentrale Steuergerät 3 errechnet nun, ausgehend vom Anfangsgewicht der Flüssigkeit im Verwägebehälter 1, das erforderliche Endgewicht des Flüssigkeitsreservoirs innerhalb dieses Behälters, das verbleiben muss, damit die Flüssigkeitsdifferenz genau der errechneten Flüssigkeits-Dosiermenge für die augenblickliche Mischaufgabe entspricht. Ist dieses berechnete Endgewicht nahezu (zum Beispiel bis auf zirka 10 Liter) erreicht, dann wird die Grobdosiereinrichtung 33 geschlossen und in der sofort nachgeschalteten zweiten Dosierphase die Feindosiereinrichtung 34 geöffnet, die dann allein die Dosierung bis hin zum genauen Endwert übernimmt. Der Verwägebehälter 1 muss dabei derart ausgelegt sein, dass sein Fassungsvermögen zur Aufnahme einer bestimmten Restwassermenge stets noch ausreichend gross ist. Das Niveau der Flüssigkeit soll während der Betriebszeit des Verwägebehälters 1 zum Beispiel nicht unter die Linie L abfallen und auch die Linie V niemals überschreiten. Weiterhin ist dafür gesorgt, dass auch beim tiefsten Flüssigkeitsstand L sowohl das Ende der Speiseleitung 12 wie auch das Ende der Ringleitung 7 innerhalb des Verwägebehälters 1 beziehungsweise die diesen Leitungsenden zugeordneten Umlenkkörper 10 stets mit Wasser bedeckt sind, wodurch ein Sprudeln und Spritzen des Wassers bei beiden Eintritten und damit die Bildung unerwünschter Luftblasen (die das Wägeresultat verfälschen würden) vermieden werden kann. Wichtig ist ferner auch, dass der Flüssigkeitsaustritt aus dem Verwägebehälter 1 störungsfrei verläuft und allmähliche Übergänge aufweist, um das Auftreten unerwünschter Wirbel und das Mitreissen von Luft zu vermeiden.

Erreicht nun das von dem Verwägebehälter 1 abgegebene Waagesignal einen Wert, der dem errechneten Endgewicht des verbleibenden Flüssigkeitsreservoirs innerhalb des Verwägebehälters 1 entspricht, dann wird über eine entsprechende Steuerleitung ein Steuerbefehl zum Schliessen des Feindosierventiles 34 abgegeben, wodurch die entsprechende Dosieraufgabe beendigt ist. Infolge der gewählten Ringleitung 7 und wegen der Inkompressibilität der Flüssigkeit muss sich immer gleich viel Flüssigkeit innerhalb der Ringleitung befinden, deren Temperatur während der ständigen, auch während des Dosiervorgangs aufrechterhaltenen Zirkulation der Flüssigkeit innerhalb der Leitung 7 stets gut ausgeglichen ist. Somit kann an den verschiedenen Anzapfstellen 20, 21, 22 und so weiter, somit an einer nahezu beliebigen Anzahl von Anzapfstellen eine (soweit im industriellen Betrieb erforderlich) ganz genaue und sehr rationelle Dosierung einer bestimmten Flüssigkeitsmenge bestimmter Temperatur erreicht werden. Der einzusetzende bauliche und steuerungstechnische Aufwand ist hierfür minimal.

Da der erforderliche Zeitaufwand für die Knetung verhältnismässig gross ist, kann bei geeigneter Dimensionierung aller Anlagenteile eine genügende Reservezeit zur Ausführung besonderer Funktionen gewährleistet werden, etwa für die Entnahme von Flüssigkeit ausser Programm oder ähnlichem. Am Ende jedes Dosierzyklus wird durch einen entsprechenden Steuerbefehl wieder das Füllen des entsprechenden Verwägebehälters 1 bewirkt. Auch während dieser Füllzeit bleibt die Umwälzpumpe 9 stets in Betrieb, was wichtig ist, um für die entsprechende Flüssigkeit auch jetzt stets eine einheitliche Temperatur sicherzustellen. Bei den verschiedenen Anzapfstellen sind zwischen den Ventilen 33 und 34 einerseits und der Ringleitung 7 andererseits möglichst kurze Rohranzapfstücke vorgesehen, da das in diesen Rohransätzen befindliche Wasser möglicherweise nicht ausreichend mit dem in der Ringleitung 7 vermischt wird, was beim Vorsehen nur kurzer Rohrstücke jedoch nur als unerheblicher Effekt auftritt.

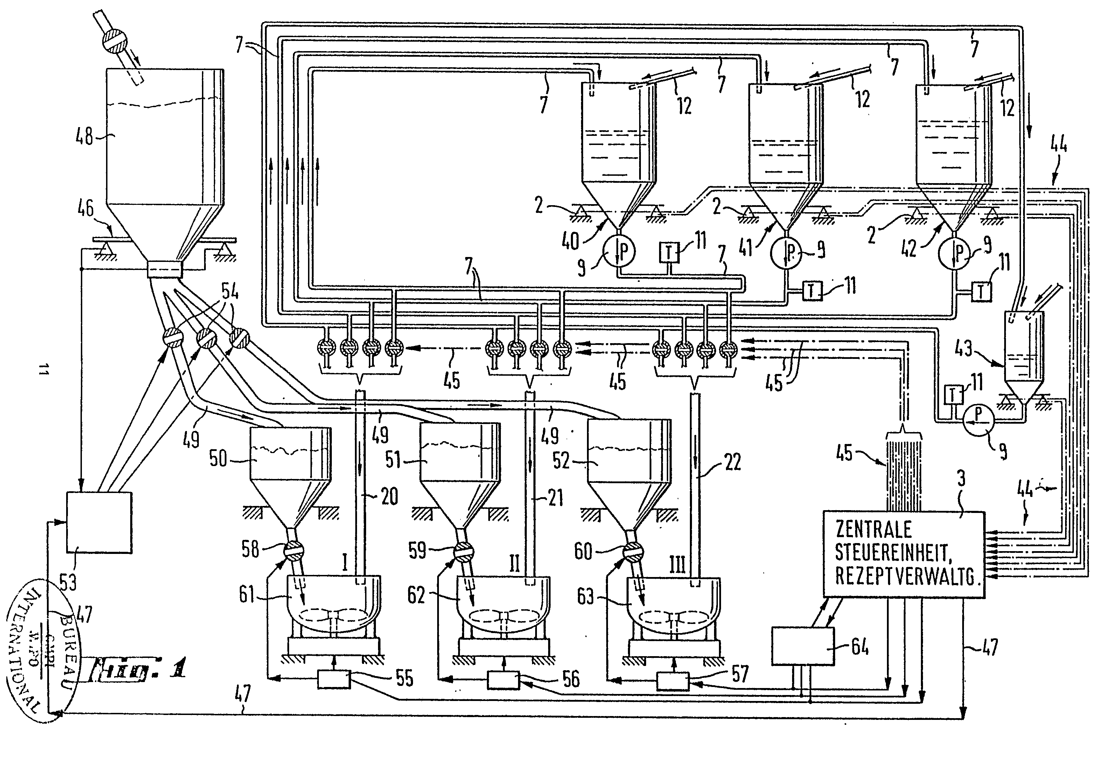

In Figur 1 ist eine Anlage in grösserem Rahmen gezeigt, bei der verschiedene Flüssigkeiten (oder ein- und dieselbe Flüssigkeit aber mit verschiedenen Temperaturen) in je einem getrennten System erfasst sind. Besonders bei grösseren Anlagen, in denen eine Vielzahl verschiedener Teigqualitäten erzeugt werden muss, ist die Separierung aller Flüssigkeitskomponenten rationell, um Totzeiten für das Mischen des Wassers entfallen zu lassen. Dennoch lassen sich auch zusätzlich die verschiedenen einzelnen flüssigen Komponenten miteinander noch beliebig vermischen, falls dies für einen Sonderfall nötig sein sollte. Die in Figur 1 gezeigte Anlage könnte prinzipiell auch mit einem einzigen Verwägesystem geführt werden, wobei dann die Aufwendungen für die Anlage wesentlich reduziert wären, hingegen deren Betriebskosten erheblich grösser würden, da bei grösseren Anlagen für jede Dosieraufgabe die Temperatur nicht nur der Restflüssigkeit, sondern auch der Anlageteile, Rohrleitungen und so weiter zu korrigieren ist. Es müssten zusätzliche Verluste kompensiert werden, weshalb von Fall zu Fall abzuwägen ist, welche Ausführungsvariante insofern optimal ist. In Figur 1 ist eine Anlage mit einem Warmwasserdosiersystem 40, einem Kaltwasserdosiersystem 41, einem Leitungswasserdosiersystem 42 sowie einem System 43 für die Hefe in Flüssigform vorgesehen. Alle vier Systeme sind im Prinzip so aufgebaut, wie dies in Figur 2 gezeigt ist, wobei jede Linie I, II, III eine entsprechende Anzahl von Dosiersystemen beziehungsweise Ventilen oder Abschlussorganen zugeordnet ist. Alle Dosiersysteme sind aber mit einem gemeinsamen zentralen Steuergerät 3 verbunden, das über Steuerleitungen 44 mit den Verwägebehältern beziehungsweise über Steuerleitungen 45 mit den Ventilen oder Abschlussorganen der Dosiereinrichtungen verbunden ist. Zusätzlich zu der in Figur 2 gezeigten Darstellung ist bei der Anlage in Figur 1 auch eine Dosiereinrichtung für eine trokkene Komponente (Mehl) dargestellt, wobei hierfür allerdings eine sehr vereinfachte Darstellungsweise gewählt wurde.

Eine Mehlwaage 46 wird über eine Steuerleitung 47 vom zentralen Steuergerät 3 angesteuert. In Figur 1 sind dabei nur symbolisch ein Waagebehälter 48 sowie mehrere Förderleitungen 49 gezeigt, die je zu einem Knetervorbehälter 50, 51 beziehungsweise 52 führen. Das zentrale Steuergerät 3 gibt über eine Untereinheit 53 das Steuersignal für eine bestimmte Dosiermenge. Dabei kann die Untereinheit 53 oder auch direkt das zentrale Steuergerät 3 den Abruf der jeweils gewünschten Mehlqualität und Menge auslösen oder aber mit einer entsprechenden Steuereinheit im Bereich der Siloanlage in Informationsaustausch treten. Die Untereinheit 53 kontrolliert ferner die notwendigen Rohrweichen 54 oder Drehrohrverteiler, um die gewogene Mehlcharge in den richtigen Vorbehälter 50, 51 und 52 zu fördern. Ebenso müssen alle übrigen Abläufe, die Hilfseinrichtungen, Förderelemente, Filter usw. in ihren Funktionen zueinander koordiniert werden. Für einen harmonischen Ablauf aller Vorgänge ist es dabei sehr wichtig, dass die erforderliche Mehlmenge in einem Vorbehälter vorgespeichert und von einer zugeordneten Steuereinheit 55, 56, 57 des zugehörigen Chargenkneters durch Öffnen beziehungsweise Schliessen eines Schiebers 58, 59 beziehungsweise 60 abgerufen werden kann.

Die Steuereinheiten 55, 56 beziehungsweise 57 können nun direkt oder unter Zwischenschaltung eines gemeinsamen Steuergerätes 64 das jeweils erforderliche Kneterprogramm abrufen. Durch die beschriebene Verknüpfung der Steuereinheiten kann dabei die gesamte Mischzusammenstellung und Knetung auf beste Weise aufeinander abgestimmt werden. Dabei ist es sehr einfach, die Dosierung jeder Einzelkomponente nochmals in Teilmengen aufzugliedern und zum Beispiel gleichzeitig Mehl und zum Beispiel Warmwasser oder Mehl und zum Beispiel Kaltwasser oder zuerst die gesamte Mehlmenge und dann gleichzeitig die gesamte Menge der verschiedenen Flüssigkeitskomponenten einzugeben. Das Kneterprogramm kann schon während der Mischungszusammenstellung laufen und so weiter. Hieraus ist ersichtlich, dass die Vielfalt aller Variationsmöglichkeiten steuerbar ist und für den jeweiligen Anwendungsfall genutzt werden kann. Die Chargenkneter selbst sind in Figur 1 als stilisierte Tröge 61, 62, 63 dargestellt, wobei jeweils ein Knetwerkzeug im Inneren im Prinzip gezeigt ist.

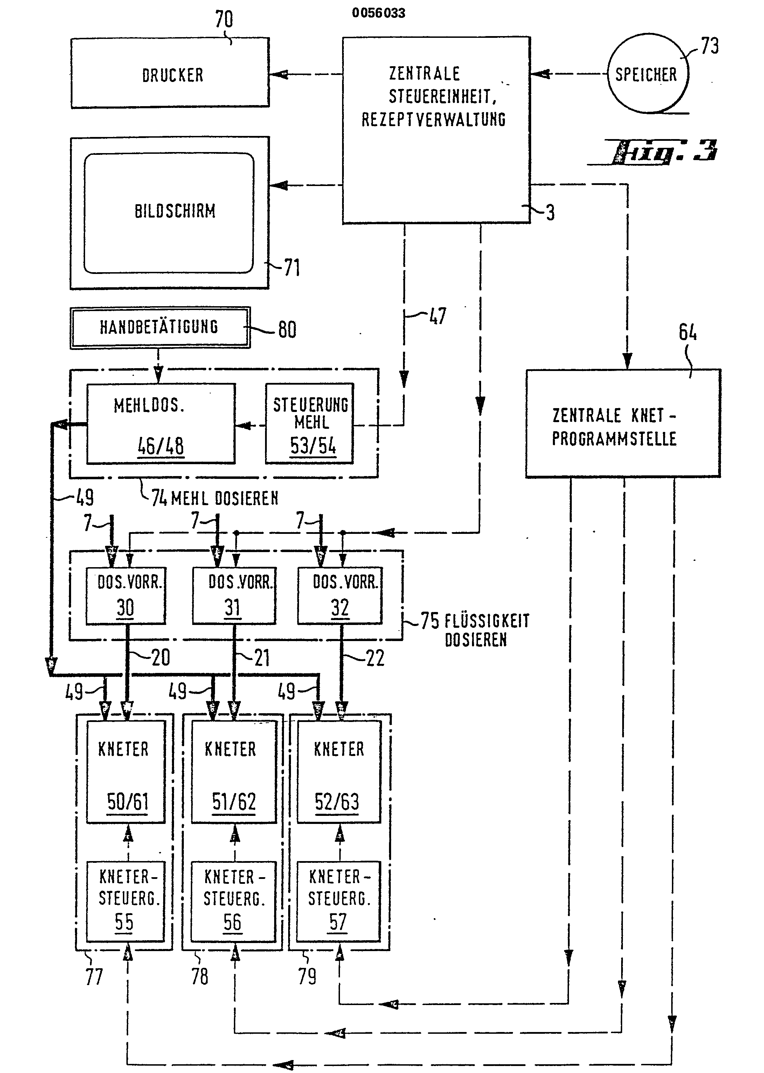

In Figur 3 ist das gesamte Steuerschema einer solchen Anlage vereinfacht dargestellt:
Vorgesehen sind ein zentrales Steuergerät 3, ein Drucker 70, ein Bildschirm 71, ein Speicher 73, eine Steuerung für die Mehlkomponenten 74, eine Steuerung für die Flüssigkeitskomponenten 75, eine zentrale Kneterprogrammstelle 64 sowie drei Steuergeräte 77, 78 und 79. Ferner ist eine Anlage für Handbetätigung 80 vorgesehen. Der Signalaustausch zwischen den einzelnen Anlagenteilen ist so gezeichnet, dass Steuerleitungen strichliert und Transportleitungen ausgezogen dargestellt sind. Der Signalfluss beziehungsweise die Steuer- und Transportleitungs-Funktionen ergeben sich aus der zeichnerischen Darstellung in Figur 3, auch unter Berücksichtigung der Darstellungen von Figur 1 und Figur 2, sogleich, so dass insoweit auf eine detaillierte Beschreibung verzichtet werden kann.

**Patentansprüche**

1. Verfahren zum Zudosieren von Mehl und/oder Flüssigkeit(en) in Chargenkneter (61–63) einer Anlage zur Teigherstellung, bei dem unter Einsatz eines Steuergerätes (3) die einem Chargenkneter (61–63) im Rezeptablauf jeweils zuzuführende Komponente bestimmt, von einem zugeordneten Aufnahmebehälter aus längs einer von diesem ausgehenden Transportleitung (5, 7; 49) gefördert und dem betreffenden Chargenkneter (61–63) zudosiert wird, dadurch gekennzeichnet, dass mittels des Steuergerätes (3) für alle Chargenkneter (61–63) die jeweils zu dosierende Komponente zentral bestimmt und deren der gewünschten Dosiermenge entsprechendes Gewicht berechnet wird, die betreffende Komponente für alle Chargenkneter (61–63) von einem für sie vorgesehenen zentralen Verwägebehälter (1, 40–42, 48) aus der entsprechenden Transportleitung (5, 7; 49) zugeführt und von dieser aus dem jeweils zu bedienenden Chargenkneter (61–63) über eine Steuerung der Öffnungsdauer der ihm jeweils zugeordneten Auslassventile (33, 34; 58–60) durch das zentrale Steuergerät (3) in Abhängigkeit von der während der Ventilöffnung im zugeordneten zentralen Verwägebehälter (1, 40–42, 48) auftretenden Gewichtsabnahme der dort aufgenommenen Komponentenmenge zudosiert wird.

2. Verfahren nach Anspruch 1, dadurch gekennzeichnet, dass die flüssige Komponente von ihrem zentralen Verwägebehälter (1, 40–42) aus längs einer als Ringleitung ausgebildeten Transportleitung (5, 7) kontinuierlich gefördert wird.

3. Verfahren nach Anspruch 1 oder 2, dadurch gekennzeichnet, dass die flüssige Komponente in verschiedenen Temperaturen zudosiert wird und jeder Dosiertemperatur ein eigener Einzelkreislauf mit Verwägebehälter(40; 41; 42) und Transportleitung zugeordnet wird.

4. Verfahren nach Anspruch 3, dadurch gekennzeichnet, dass die Temperatur der jeweiligen flüssigen Komponente im Verwägebehälter (40; 41; 42) oder in der Transportleitung laufend gemessen und mittels des zentralen Steuergerätes auf einen vorgegebenen Wert eingeregelt wird.

5. Verfahren nach einem der Ansprüche 1 bis 4, dadurch gekennzeichnet, dass das Ausdosieren der Komponenten aus dem jeweiligen Auslassventil (33, 34) zweiphasig durchgeführt wird, wobei die erste Auslassphase als Grobstromdosierung und die sich unmittelbar anschliessende zweite Phase als Feinstromdosierung vorgenommen wird.

6. Anlage zur Durchführung eines Verfahrens nach einem der Ansprüche 1 bis 5, mit Chargenknetern (61–63) zur Teigherstellung, mit Transportleitungen (5, 7; 49), über die jeder Chargenkneter (61–63) mit einem Aufnahmebehälter für die jeweils zu dosierende Komponente verbunden ist, und mit einem Steuergerät (3), mittels dessen die Ausdosierung der Komponenten aus den jeweiligen Transportleitungen (5, 7; 49) steuerbar ist, dadurch gekennzeichnet, dass für jede der zu dosierenden Komponenten ein für alle Chargenkneter (61–63) zentraler Verwägebehälter (1, 40–42, 48) als Aufnahmebehälter vorgesehen ist, von dem aus mittels einer Transportleitung (5, 7; 49) die betreffende Komponente an jede zu bedienende Dosierstelle transportierbar ist, wobei

längs jeder solcher Transportleitung (5, 7; 49) den einzelnen zu bedienenden Chargenknetern (61–63) zugeordnete Anzapfstellen (20–22) mit Auslassventilen (33, 34; 58–60) angeordnet sind, und dass das Steuergerät (3) als alle Chargenkneter zentral steuernd ausgebildet ist und durch das zentrale Steuergerät (3) die den gewünschten Dosiermengen aller zu dosierenden Komponenten entsprechenden Gewichte berechenbar sowie die Dosierfolge der Einzelkomponenten im Rezeptablauf auslösbar sind, und dass ferner Zeitpunkt und Dauer der Öffnung der Auslassventile (33, 34; 58–60) von dem zentralen Steuergerät (3) steuerbar sind.

7. Anlage nach Anspruch 6, dadurch gekennzeichnet, dass für die flüssige(n) Dosierkomponente(n) die jeweilige Transportleitung (5, 7) vom zugehörigen Verwägebehälter (1, 40–42) aus als in diesen zurücklaufende Ringleitung mit Umwälzpumpe (9) ausgebildet ist.

8. Anlage nach Anspruch 7, dadurch gekennzeichnet, dass jede Umwälzpumpe (9) vom zentralen Steuergerät (3) betätigbar ist.

9. Anlage nach einem der Ansprüche 6 bis 8, dadurch gekennzeichnet, dass das zentrale Steuergerät (3) auf eine Handsteuerung umschaltbar ist.

10. Anlage nach einem der Ansprüche 6 bis 9, dadurch gekennzeichnet, dass das zentrale Steuergerät (3) jeden Chargenkneter (61, 62, 63) über jeweils eine diesem zugeordnete Steuereinheit (55, 56, 57) ansteuert.

11. Anlage nach Anspruch 10, dadurch gekennzeichnet, dass die Steuereinheiten (55–57) mehrerer Chargenkneter (51–53) über ein ihnen gemeinsames Steuergerät (64) an das zentrale Steuergerät (3) angeschlossen sind.

12. Anlage nach Anspruch 10 oder 11, dadurch gekennzeichnet, dass die Steuereinheiten (55–57) auf Handsteuerung umschaltbar sind.

13. Anlage nach einem der Ansprüche 6 bis 12, dadurch gekennzeichnet, dass die Auslassventile wenigstens der Transportleitungen (5, 7) für flüssige Dosierkomponenten ein Abschlussorgan (33) für Grobdosierung sowie ein Abschlussorgan (34) für Feindosierung aufweisen, wobei die Abschlussorgane von dem zentralen Steuergerät (3) aus ansteuerbar sind.

14. Anlage nach Anspruch 7, dadurch gekennzeichnet, dass in Ringleitungen (7) für Flüssigkeiten unterschiedlicher Temperatur Temperaturfühler (11) angebracht sind, die an das zentrale Steuergerät (3) angeschlossen sind, und dass jedem solchen Kreislauf eine vom zentralen Steuergerät (3) gesteuerte Temperatur-Regeleinrichtung zugeordnet ist.

## Claims

1. Process for the metered addition of flour and/or liquid or liquids to batch kneaders (61–63) of a dough-producing installation, in which, by the use of a control apparatus (3), the component to be supplied at a particular time to a batch kneader (61–63) during the recipe cycle is determined, conveyed from an associated receiving vessel along a transport line (5, 7; 49), extending from the latter, and added to the particular batch kneader (61–63), characterised in that by means of the control apparatus (3) the particular component to be metered is determined centrally for all the batch kneaders (61–63) and its weight corresponding to the desired metered quantity is calculated, the particular component for all the batch kneaders (61–63) is supplied, by a central weighing vessel (1, 40–42, 48) provided for it, from the appropriate transport line (5, 7; 49) and is added from the latter to the particular batch kneader (61–63) to be operated, via a control of the opening duration of the particular outlet valve (33, 34; 58–60), assigned to it, by the central control apparatus (3) as a function of the decrease in weight, occurring during the opening of the valve in the associated central weighing vessel (1, 40–42, 48), of the component quantity received in the latter.

2. Process according to claim 1, characterised in that the liquid component is conveyed continuously from its central weighing vessel (1, 40–42) along a transport line (5, 7) designed as a ring main.

3. Process according to claim 1 or 2, characterised in that the liquid component ist added at different temperatures, and a particular individual circuit with a weighing vessel (40, 41; 42) and a transport line is assigned to each metering temperature.

4. Process according to claim 3, characterised in that the temperature of the particular liquid component in the weighing vessel (40; 41; 42) or in the transport line is measured continuously and set to a predetermined value by means of a central control unit.

5. Process according to one of claims 1 to 4, characterised in that the components are metered from the particular outlet valve (33, 34) in two phases, the first outlet phase being executed as coarse–flow metering and the second phase immediately following it being executed as fine-flow metering.

6. Installation for carrying out a process according to one of claims 1 to 5, with batch kneaders (61–63) for dough production, with transport lines (5, 7; 49), via which each batch kneader (61–63) is connected to a receiving vessel for the particular component to be metered, and with a control apparatus (3), by means of which the metering of the components from the particular transport lines (5, 7; 59) can be controlled, characterised in that for each of the components to be metered there is as a receiving vessel a weighing vessel (1, 40–42, 48) which is central for all the batch kneaders (61–63) and from which the particular component can be transported by means of a transport line (5, 7; 49) to each metering point to be serviced, tapping points (20–22) assigned to the individual batch kneaders (61–63) to be serviced and having outlet valves (33, 34; 58–60) being arranged along each such transport line (5, 7; 49), and in that the control apparatus (3) is designed so as to control all the batch kneaders centrally, and by means of the central control apparatus (3) the weights corresponding to the desired metering quantities of all the components to be metered can be calculated and the metering sequence of the individual components during the recipe cycle can be initiated, and, furthermore, in that the time and duration of opening of the outlet valves (33, 34; 58–60) can be controlled by the central control apparatus.

7. Installation according to claim 6, characterised in that for the liquid metering component or components the particular transport line (5, 7) from the associated weighing vessel (1, 40–42) is designed as a closed circular line returning to the latter and having a circulating pump (9).

8. Installation according to claim 7, characterised in that each circulating pump (9) can be actuated by the central control apparatus (3).

9. Installation according to one of claims 6 to 8, characterised in that the central control apparatus (3) can be changed over to manual control.

10. Installation according to one of claims 6 to 9, characterised in that the central control apparatus (3) controls each batch kneader (61, 62, 63) via a particular control unit (55, 56, 57) assigned to the latter.

11. Installation according to claim 10, characterised in that the control units (55–57) of several batch kneaders (51–53) are connected to the central control apparatus (3) via a control apparatus (64) common to them.

12. Installation according to claim 10 or 11, characterised in that the control units (55–57) can be changed over to manual control.

13. Installation according to one of claims 6 to 12, characterised in that the outlet valves at least of the transport lines (5, 7) for liquid metering components have a shut-off member (33) for coarse metering and a shut-off member (34) for fine metering, and the shut-off members can be controlled from the central control apparatus (3).

14. Installation according to claim 7, characterised in that temperature sensors (11) connected to the central control apparatus (3) are provided in closed circular lines (7) for liquids of different temperatures, and in that a temperature-regulating device controlled by the central control apparatus (3) is assigned to each such circuit.

## Revendications

1. Procédé pour introduire des quantités dosées de farine et/ou de liquide(s) dans des pétrins à fonctionnement discontinu (61–63) d'une installation de production de pâte, dans lequel en utilisant un appareil de commande (3), on détermine chaque composant à envoyer dans un pétrin (61–63) au cours du processus opératoire, on l'achemine à partir d'un récipient qui lui est associé le long d'une conduite de transport (5, 7; 49) qui en part et on l'envoie par quantités dosées dans le pétrin à fonctionnement discontinu (61–63), caractérisé en ce qu'on détermine centralement au moyen de l'appareil de commande (3), pour tous les pétrins (61–63), le composant à envoyer par quantités dosées dans chacun et l'on en calcule le poids correspondant au dosage souhaité, on envoie le composant concerné, pour tous les pétrins (61–63), à la conduite de transport correspondante, à partir d'un récipient de pesée central (1, 40–42, 48) et à partir de cette conduite, on en envoie à chacun des pétrins (61–63) à manœuvrer par une commande de la durée d'ouverture des soupapes de sortie (33, 34; 58–60) affectées à chacun, effectuée par l'appareil de commande central (3), en fonction de la diminution de poids de la quantité de composant qui y est reçue se produisant pendant l'ouverture de la soupape dans le récipient de pesée central (1, 40–42, 48) correspondant.

2. Procédé selon la revendication 1, caractérisé en ce que l'on achemine en continu le composant liquide, à partir de son récipient de pesée central (1, 40–42), le long d'une conduite de transport (5, 7) réalisée sous la forme d'une conduite annulaire.

3. Procédé selon la revendication 1 ou 2, caractérisé en ce que l'on envoie des quantités dosées de composant liquide à différentes températures, et en ce qu'un circuit particulier comportant des récipients de pesée (40; 41; 42) et une conduite de transport correspond à chaque température de dosage.

4. Procédé selon la revendication 3, caractérisé en ce que l'on mesure en continu la température de chaque composant liquide dans le récipient de pesée (40; 41; 42) ou dans la conduite de transport, et on la règle à une valeur prédéterminée au moyen de l'appareil de commande central.

5. Procédé selon l'une des revendications 1 à 4, caractérisé en ce que l'on extrait les quantités dosées des composants par chacune des soupapes de sortie (33, 34) en deux phases, en effectuant la première phase de sortie sous la forme d'un dosage grossier et en la faisant suivre immédiatement de la seconde phase sous la forme d'un dosage fin.

6. Installation pour mettre en œuvre le procédé selon l'une des revendications 1 à 5, comportant des pétrins à fonctionnement discontinu (61–63) pour fabriquer de la pâte, des conduites de transport (5, 7; 49) par lesquelles chaque pétrin (61–63) est relié à un récipient destiné à chacun des composants à doser, et un appareil de commande (3) permettant de contrôler la distribution des composants sortant de chacune des conduites de transport (5, 7; 49), caractérisée en ce qu'elle comporte, pour chacun des composants à doser, un récipient de pesée central (1, 40–42, 48), réalisé en forme de réceptacle, pour tous les pétrins à fonctionnement discontinu (61–63) à partir duquel, grâce à une conduite de transport (5, 7; 49), le composant concerné peut être amené à chaque emplacement de dosage à manœuvrer des points de prélèvement (20–22) comportant des soupapes de sortie (33, 34; 58–60) correspondant aux différents pétrins à manœuvrer disposés le long de chacune de ces conduites de transport (5, 7; 49), en ce que l'appareil de commande (3) est réalisé de façon à commander centralement tous les pétrins à fonctionnement discontinu, en ce qu'au moyen de cet appareil de commande central (3), les poids correspondant aux quantités de dosage souhaitées de tous les composants correspondants à doser, peuvent être calculés et la suite de dosages des composants individuels au cours du processus peut être déclenchée et en ce qu'en outre ledit appareil de commande central (3) peut régler l'instant et la durée d'ouverture des soupapes de sortie (33, 34; 58–60).

7. Installation selon la revendication 6, caractérisée en ce que, pour le ou les composant(s) de dosage liquide(s), chaque conduite de transport (5, 7) partant du récipient de pesée correspondant (1, 40–42) est réalisé sous la forme d'une canalisation circulaire retournant à celui-ci, et comportant une pompe de circulation (9).

8. Installation selon la revendication 7, caractérisée en ce que chaque pompe de circulation (9) est actionnée de l'appareil de commande central (3).

9. Installation selon l'une des revendications 6 à 8, caractérisée en ce que l'appareil de commande central (3) peut être commuté sur une commande manuelle.

10. Installation selon l'une des revendications 6 à 9, caractérisée en ce que l'appareil de commande central (3) attaque chaque pétrin à fonctionnement discontinu (61, 62, 63) par l'intermédiaire d'une unité de commande respective correspondant à chacun d'eux (55, 56, 57).

11. Installation selon la revendication 10, caractérisée en ce que les unités de commande (55–57) de plusieurs pétrins à fonctionnement discontinu (51–53) sont reliées à l'appareil de commande central (3) par l'intermédiaire d'un appareil de commande (64) qui leur est commun.

12. Installation selon la revendication 10 ou 11, caractérisée en ce que les unités de commande (55–57) peuvent être commutées sur une commande manuelle.

13. Installation selon l'une des revendications 6 à 12, caractérisée en ce que les soupapes de sortie des conduites (5, 7) de transport des composants de dosage liquides au moins comportent un organe d'arrêt (34) pour dosage fin les organes d'arrêt pouvant être attaqués à partir de l'appareil de commande central (3).

14. Installation selon la revendication 7, caractérisée en ce qu'elle comporte, dans des conduites circulaires (7) pour des liquides de température différente, des sondes de température (11) qui sont reliées à l'appareil de commande central (3), et en ce qu'un dispositif de réglage de température commandé à partir de l'appareil de commande central (3) correspond à chacun de ces circuits.

ZENTRALE STEUEREINHEIT, REZEPTVERWALTG.

Fig. 1

**Fig. 2**

ZENTRALE
STEUEREINHEIT
REZEPTVERWALTG.

0056033

DRUCKER 70

ZENTRALE STEUEREINHEIT, REZEPTVERWALTUNG 3

SPEICHER 73

BILDSCHIRM 71

*Fig. 3*

HANDBETÄTIGUNG 80

47

64

MEHLDOS. 46/48

STEUERUNG MEHL 53/54

ZENTRALE KNET-PROGRAMMSTELLE

49

74 MEHL DOSIEREN

7  7  7

DOS.VORR. 30

DOS.VORR. 31

DOS.VORR. 32

75 FLÜSSIGKEIT DOSIEREN

20  21  22

49  49  49

KNETER 50/61

KNETER 51/62

KNETER 52/63

KNETER-STEUERG. 55

KNETER-STEUERG. 56

KNETER-STEUERG. 57

77  78  79

15